Europäisches Patentamt

European Patent Office

Office européen des brevets

(11) Publication number: **0 438 300 B1**

# EUROPEAN PATENT SPECIFICATION

(45) Date of publication of patent specification: **17.11.94**    (51) Int. Cl.⁵: **C04B 35/48**, C04B 35/64

(21) Application number: **91300340.6**

(22) Date of filing: **17.01.91**

(54) **Sintered body of zircon and process for its production.**

(30) Priority: **17.01.90 JP 6477/90**

(43) Date of publication of application:
**24.07.91 Bulletin 91/30**

(45) Publication of the grant of the patent:
**17.11.94 Bulletin 94/46**

(84) Designated Contracting States:
**DE FR GB**

(56) References cited:

**JOURNAL OF THE CERAMIC SOCIETY OF JAPAN vol. 98, no. 9, September 1990, TOKYO,JP pages 1023 - 1028; T.MORI ET AL.: 'Mechanical Properties of High-P**

**GLASS TECHNOLOGY vol. 19, no. 4, A**

**JOURNAL OF MATERIALS SCIENCE LETTERS vol. 5, no. 2, Febr**

(73) Proprietor: **Tosoh Corporation**
**4560, Kaisei-cho**
**Shinnanyo-shi, Yamaguchi-ken (JP)**

(72) Inventor: **Mori, Toshiyuki**
**906-12 Tokaichiba-cho,**
**Midori-ku**
**Yokohama-shi, Kanagawa-ken (JP)**
Inventor: **Hoshino, Hirokuni**
**9, Urashimaoka,**
**Kanagawa-ku**
**Yokohama-shi, Kanagawa-ken (JP)**
Inventor: **Yamamura, Hiroshi**
**2-2, Tsutsujigaoka,**
**Midori-ku**
**Yokohama-shi, Kanagawa-ken (JP)**
Inventor: **Mitamura, Takashi**
**8-22-11, Tokiwa**
**Urawa-shi, Saitama-ken (JP)**
Inventor: **Kobayashi, Hidehiko**
**70-1, Sanchomen,**
**Fukiage-cho**
**Kitaadachi-gun, Saitama-ken (JP)**

(74) Representative: **Kearney, Kevin David Nicholas et al**
**KILBURN & STRODE**
**30 John Street**
**London, WC1N 2DD (GB)**

EP 0 438 300 B1

**Description**

The present invention relates to a sintered body of zircon useful as a high temperature structural material and to a process for its production.

The following methods have been proposed for the production of a sintered body of zircon:

(1) A method wherein titania is incorporated to obtain a dense sintered body of zircon (New Material Series "Zircon" p. 149-217, complied by Shigeyuki Somiya, Rokakuho Uchida (1989)).

(2) A method which comprises moulding and firing a powder mixture of zirconia and silica obtained by using an aqueous water glass solution or an aqueous solution of colloidal silica and zirconium salt as the starting material, wherein conversion to zircon and sintering are permitted to proceed during the firing (Japanese Patent Publications No. 195167/1988 and No. 248768/1988).

However, in the sintered body obtained by the method (1), titania tends to form a glass phase at the grain boundaries, and in the sintered body obtained by the method (2), unreacted zirconia or silica tends to remain in the sintered body and the grain size of the obtained sintered body tends to be non-uniform. Both sintered bodies have a drawback that the mechanical strength at high temperature e.g. 1400°C is very low.

It is an object of the present invention to solve the above problem and to provide a sintered body of zircon which has excellent mechanical properties at high temperature e.g. at a level of 1400°C and which has high density, high strength and fine structure, and to provide a process for its production.

The present invention provides:

1. A sintered body of zircon having a zircon content of at least 98 wt%, a content of metal impurities other than zirconium and silicon of at most 0.44 wt% calculated as elemental single substances, a bulk density of at least 4.55 g/cm$^3$ and an average grain size of at most 5 $\mu$m; and

2. A process for producing a sintered body of zircon, which comprises moulding a crystalline zircon powder having a Si/Zr atomic ratio of from 0.95 to 1.1, a zircon content of at least 80 wt%, a content of metal impurities other than zirconium and silicon of at most 0.44 wt% calculated as elemental single substances and an average particle size of at most 2.0 $\mu$m, followed by sintering within a temperature range of from 1600 to 1700°C for at least 30 minutes.

Now, the present invention will be described in detail.

The majority of impurities in a sintered body of zircon produced from a usual raw material is zirconia and silica, i.e. zirconium and silicon as metals. As other impurities, titanium, magnesium, aluminium, sodium and iron are major impurities. These impurities influence the properties of the sintered body of zircon, and other impurities are usually not contained in such a large amount as to influence the properties.

Zirconia is present at the grain boundaries in the sintered body of zircon and thus forms a defect in the fine structure, which substantially lowers the mechanical properties of the sintered body of zircon at high temperature. Further, zirconia has a larger thermal expansion coefficient and thus increases the thermal expansion coefficient of the sintered body, whereby the thermal shock resistance necessary for a high temperature structural material will be lowered. On the other hand, silica is present also at the grain boundaries in the sintered body of zircon. This silica phase softens at a high temperature of at least 1000°C, whereby the mechanical strength deteriorates. By controlling the total content of zirconia and silica to a level of at most 2 wt%, these adverse effects to the sintered body of zircon can be reduced to a practically harmless level.

The content of metal impurities other than zirconium and silicon in the sintered body of zircon must be at most 0.44 wt% as calculated as elemental single substances, because such metal impurities will be present in the form of low melting products formed by e.g. the following reactions with zircon and thus lower the mechanical strength of the sintered body of zircon at high temperature:

$$ZrSiO_4 + TiO_2 \rightarrow Zr TiO_4 + SiO_2$$
$$2ZrSiO_4 + 3A\ell_2O_3 \rightarrow 2ZrO_2 + A\ell_6Si_2O_{13}$$
$$3ZrSiO_4 + 2Fe_3O_4 \rightarrow 3ZrO_2 + 3FeSiO_4 + O_2$$

Further, the grain size of the sintered body must be at most 5 $\mu$m and the bulk density must be at least 4.55 g/cm$^3$. If either condition is not satisfied, the sintered body will not have adequate mechanical strength.

The content of metal impurities other than zirconia and silica in a powder raw material to be sintered to obtain a sintered body of the present invention, must of course be at most 0.44 wt% as calculated as elemental single substances. However, zirconia and silica may be contained in their total amount of up to 20 wt% in the raw material powder, since they undergo a conversion reaction to zircon during the sintering. However, their ratio must of course be a substantially stoichiometrical ratio i.e. an Si/Zr atomic ratio of from 0.95:1 to 1.1:1. If the atomic ratio is less than this range, $ZrO_2$ tends to precipitate at the grain boundaries

2

and thus lower the strength at a high temperature. On the other hand, if the atomic ratio exceeds this range, $SiO_2$ tends to precipitate at the grain boundaries, whereby the grain boundaries tend to slip at high temperature, and softening of the sintered body tends to occur. By sintering a raw material having a Si/Zr atomic ratio of substantially from 0.95 to 1.1, a zircon content of at least 80 wt% and a content of metal impurities other than zirconium and silicon of at most 0.44 wt% as calculated as elemental single substances, it is possible to obtain a sintered body of zircon having a zircon content of at least 98 wt%. Further, the average particle size of this raw material powder must be at most 2.0 $\mu$m. According to the process of the present invention, sintering is conducted at a relatively high temperature as described hereinafter, as a raw material powder of high purity is employed. Unless the particle size is adjusted to be as small as above, it becomes difficult to obtain a dense sintered body i.e. a sintered body having a bulk density of at least 4.55 g/cm$^3$.

The sintering temperature must be at a level of from 1600 to 1700°C. According to the process of the present invention, a raw material powder of high purity is employed, whereby unless the temperature is adjusted to be at such a high level, sintering will not properly proceed and it becomes difficult to obtain a dense sintered body. Thus, the process of the present invention is characterised in that the sintering is conducted at such a high temperature. Namely, by conducting the sintering at such a high temperature, it is possible to obtain a sintered body having a high bulk density and consequently high mechanical strength. On the other hand, in a case where a raw material powder having a large content of metal impurities is employed, not only a sintered body having a low strength at a high temperature will be obtained, but also zircon will be decomposed if sintered at such a high temperature. Accordingly, the sintering has to be conducted at a lower temperature, whereby only a sintered product having a low bulk density will be obtained. However, if the sintering temperature is raised beyond 1700°C, even in the case of using a raw material powder of high purity as in the present invention, zircon tends to be decomposed, and zirconia and silica tend to precipitate at the grain boundaries, whereby the product will be a sintered product having poor mechanical properties at high temperature. In order to let the sintering proceed sufficiently to provide adequate density, the sintering time must be at least 30 minutes. On the other hand, if the sintering time is too long, crystal growth proceeds so much that the mechanical strength tends to deteriorate. Therefore, the sintering time is preferably at most 10 hours.

A sintered body of adequate quality can be obtained by normal pressure sintering. However, it is possible to prepare a sintered body having even better mechanical properties when sintering is conducted by hot press or hot isostatic press (HIP) sintering.

As described in the foregoing, the sintered body of the present invention has high strength even at a high temperature at a level of 1400°C and high thermal shock resistance, and according to the process of the present invention, such a sintered body of zircon can easily be prepared.

Now, the present invention will be described in further detail with reference to Examples. However, it should be understood that the present invention is by no means restricted by such specific Examples.

EXAMPLES and COMPARATIVE EXAMPLES

Zirconia sol (concentration: 20 wt%, manufactured by Nissan Chemical Industries Ltd.) and silica sol (concentration: 20 wt%, manufactured by Nissan Chemical Industries Ltd.) were mixed to bring the Si/Zr atomic ratio to 1.0 within an allowable weighing error range, and the pH of this mixture solution was adjusted to 5 by use of a 1N aqueous ammonia solution. The solution was stirred for 12 hours and dried by means of an evaporator. To the powder obtained, 1.0 wt% of crystalline zircon was added, and this powder mixture was mixed for 24 hours in a ball mill by using zirconia balls in ethanol. The power mixture thereby obtained was dried by means of an evaporator and fired at 1400°C in the atmosphere to obtain fine zircon powder of high purity.

Further, powder mixtures having zirconia powder (manufactured by TOSOH CORPORATION) added in an amount of 1.5 parts by weight (Comparative Example 4) and 18.0 parts by weight (Comparative Example 5), respectively, to 100 parts by weight of the above fine zircon powder of high purity, were prepared. Fine zircon sand powder (produced in Australia) was also prepared (Comparative Example 6).

Each of the above fine powders was moulded by a mould under a pressure of 49 Mpa (500 kg/cm$^2$) and subjected to and isostatic pressing in a rubber press under a pressure of 196,2 Mpa (2 ton/cm$^2$) to obtain a shaped product, which was then sintered.

The zircon content was calculated by the following formula from the area ratio of four peaks for (200) of zircon at $2\theta$ = 26-32°, (111) and (11$\overline{1}$) of monoclinic system zirconia and (101) of tetragonal system zirconia by a powder X-ray diffraction test:

$$I(200)/\{I(200) + I(111) + I(11\bar{1}) + I(101)\}$$

where I represents the X-ray intensity, and the numeral in ( ) represents a miller index.

The analysis of the metal impurities was conducted by chemical analysis.

The particle size of the fine zircon powder of high purity was examined by means of a scanning electron microscope. The grain size of the sintered body was determined by subjecting the sintered body to thermal etching at 1500°C, followed by examination by means of a scanning electron microscope. The thermal etching treatment was to polish the sample to obtain a mirror finish surface and then heat the sample and the polished surface in air at 1500°C for 5 hours.

The method used to determine grain size and particle size was the known so-called intercept method using the diameter method version.

Reference is made to the following two publications for a detailed discussion of this method:

(1) E.E. Underwood, A.R. Colcord and W.C. Wangh, "Ceramic Microstructures" ed. by T.A. Pask and R.M. Fulrath, Wiley and Sons (1966) p.25-52.

(2) E.E. Underwood, "Quantitative Stereology", Addison Wesley (1970).

The method used in the present invention was to photograph the sample whose particle size or grain size was to be determined at 500 fold magnification. An area containing 200 grains or particles was then analysed. An arbitrary direction was selected and the maximum length of each grain or particle in the said direction was measured and the average of these lengths was taken as the grain size or particle size and is the value referred to herein.

The mechanical strength was conducted by a three point bending test (JIS R-1601). The thermal shock resistance was measured by heating a sample to a predetermined temperature and then dropping it into water at 20°C, followed by carrying out a three point bending test. The thermal shock resistance value is the temperature at which no deterioration in the strength resulted from the heating and sudden cooling.

Tables 1A to 1C below give details of Examples 1 to 8, Tables 2A to 2C below give details of comparative Examples 1 to 8. Tables 1A and 2A give details of the powder before sintering, Tables 1B and 2B give details of the sintering conditions and some details of the sintered body; and Tables 1C and 2C give details of the physical properties of the sintered body.

Table 1A

| Example No. | Zircon powder | | | |
|---|---|---|---|---|
| | Zircon content (wt%) | Si/Zr atomic ratio | Content of metal impurities (wt%) | Average particle size ($\mu$m) |
| 1 | 95.0 | 1.00 | 0.24 | 0.5 |
| 2 | 95.0 | 1.00 | 0.25 | 0.5 |
| 3 | 95.0 | 1.00 | 0.25 | 0.5 |
| 4 | 95.0 | 1.00 | 0.25 | 0.5 |
| 5 | 95.0 | 1.00 | 0.24 | 0.5 |
| 6 | 95.0 | 1.00 | 0.25 | 0.5 |
| 7 | 95.0 | 1.00 | 0.24 | 0.5 |
| 8 | 93.8 | 1.00 | 0.24 | 1.2 |

Table 1B

| Example No. | Sintering conditions | | Sintered body | | |
|---|---|---|---|---|---|
| | Temp. (°C) | time (hr) | Zircon content (wt%) | Bulk density (g/cm$^3$) | Average grain size ($\mu$m) |
| 1 | 1650 | 2 | 100 | 4.55 | 4.3 |
| 2 | 1680 | 2 | 100 | 4.59 | 4.5 |
| 3 | 1650 | 2 | 98 | 4.58 | 3.8 |
| 4 | 1680 | 2 | 98 | 4.60 | 4.5 |
| 5 | 1650 | 6 | 100 | 4.60 | 4.5 |
| 6 | 1680 | 6 | 100 | 4.60 | 4.7 |
| 7 | 1630 | 6 | 100 | 4.56 | 4.1 |
| 8 | 1680 | 2 | 100 | 4.57 | 4.7 |

Table 1C

| Example No. | Physical properties of the sintered body | | | | |
|---|---|---|---|---|---|
| | Room temp. strength (MPa) | Strength at 1400°C (MPa) | Hardness (GPa) | Fracture toughness (MPa$\sqrt{m}$) | Thermal shock resistance value (°C) |
| 1 | 313 | 310 | 15.2 | 2.8 | 300 |
| 2 | 335 | 340 | 15.2 | 2.8 | 300 |
| 3 | 410 | 408 | 15.1 | 2.7 | 300 |
| 4 | 360 | 358 | 15.1 | 2.8 | 300 |
| 5 | 400 | 400 | 15.2 | 2.7 | 300 |
| 6 | 405 | 406 | 15.2 | 2.8 | 300 |
| 7 | 351 | 350 | 15.2 | 2.8 | 300 |
| 8 | 381 | 383 | 15.1 | 2.7 | 300 |

## Table 2A

| Comparative Example No. | Zircon powder | | | |
|---|---|---|---|---|
| | Zircon content (wt%) | Si/Zr atomic ratio | Content of metal impurities (wt%) | Average particle size ($\mu$m) |
| 1 | 95.0 | 1.00 | 0.25 | 0.5 |
| 2 | 95.0 | 1.00 | 0.25 | 0.5 |
| 3 | 95.0 | 1.00 | 0.25 | 0.5 |
| 4 | 92.0 | 0.90 | 0.24 | 0.5 |
| 5 | 90.0 | 1.40 | 0.24 | 0.5 |
| 6 | 94.3 | 1.00 | 0.86 | 1.8 |
| 7 | 95.0 | 1.00 | 0.25 | 2.5 |
| 8 | 60.0 | 1.00 | 0.25 | 0.5 |

The non-zircon content of the samples is made up of unreacted zirconia and silica. The following impurities quoted as the individual elements as wt %:

Fe <0.01, Ca <0.005, Ti <0.005, Mg <0.002,

Y = 0.04, Na = 0.023, Mn = 0.001, V = 0.002

and A = 0.15, total 0.238, were present in Example 1.

Table 2B

| Comparative Example No. | Sintering conditions | | Sintered body | | |
|---|---|---|---|---|---|
| | Temp. (°C) | time (hr) | Zircon content (wt%) | Bulk density (g/cm$^3$) | Average grain size ($\mu$m) |
| 1 | 1550 | 2 | 100 | 4.30 | 4.1 |
| 2 | 1600 | 0.1 | 100 | 4.40 | 4.3 |
| 3 | 1800 | 2 | 88 | 4.00 | 10.0 |
| 4 | 1680 | 2 | 90 | 4.52 | 4.5 |
| 5 | 1680 | 2 | 90 | 4.53 | 5.0 |
| 6 | 1650 | 10 | 90 | 4.30 | 15.6 |
| 7 | 1650 | 10 | 89 | 4.40 | 3.7 |
| 8 | 1650 | 2 | 95 | 4.48 | 6.7 |

## Table 2C

| Compara-tive Example No. | Physical properties of the sintered body | | | | |
|---|---|---|---|---|---|
| | Room temp. strength (MPa) | Strength at 1400°C (MPa) | Hardness (GPa) | Fracture toughness (MPa$\sqrt{m}$) | Thermal shock resistance value (°C) |
| 1 | 203 | 200 | 14.0 | 2.7 | 300 |
| 2 | 195 | 190 | 14.5 | 2.8 | 300 |
| 3 | 120 | 95 | 15.0 | 2.7 | 250 |
| 4 | 310 | 200 | 15.1 | 2.7 | 250 |
| 5 | 320 | 110 | 14.5 | 2.8 | 250 |
| 6 | 190 | 48 | 13.0 | 2.0 | 250 |
| 7 | 193 | 186 | 14.2 | 2.8 | 300 |
| 8 | 200 | 190 | 14.0 | 2.8 | 300 |

## Claims

1. A sintered body of zircon characterised in that it has a zircon content of at least 98 wt%, a content of metal impurities other than zirconium and silicon of at most 0.44 wt% calculated as elemental single substances, and a bulk density of at least 4.55 g/cm$^3$.

2. A sintered body of zircon characterised in that it has a zircon content of at least 98 wt%, a content of metal impurities other than zirconium and silicon of at most 0.44 wt% calculated as elemental single substances, and a bulk density of at least 4.55 g/cm$^3$ and an average grain size of at most 5 $\mu$m.

3. A process for producing a sintered body of zircon, characterised in that it comprises moulding a crystalline zircon powder having a Si/Zr atomic ratio of from 0.95 to 1.1, a zircon content of at least 80 wt%, a content of metal impurities other than zirconium and silicon of at most 0.44 wt% calculated as elemental single substances followed by sintering within a temperature range of from 1600 to 1700°C for at least 30 minutes.

4. A process for producing a sintered body of zircon, characterised in that it comprises moulding a crystalline zircon powder having a Si/Zr atomic ratio of from 0.95 to 1.1, a zircon content of at least 80 wt%, a content of metal impurities other than zirconium and silicon of at most 0.44 wt% calculated as elemental single substances and an average particle size of at most 2.0 $\mu$m, followed by sintering within a temperature range of from 1600 to 1700°C for at least 30 minutes.

5. A process as claimed in Claim 3 or Claim 4, characterised in that the sintering is conducted for at most 10 hours.

6. A process as claimed in Claim 3, 4 or 5, characterised in that the sintering is conducted by hot press or hot or cold isostatic press sintering.

**Patentansprüche**

1. Sinterkörper aus Zirconium, **dadurch gekennzeichnet, daß** er einen Zirconiumgehalt von mindestens 98 Gew.-%, einen Gehalt an metallischen Fremdstoffen außer Zirconium und Silicium von höchstens 0,44 Gew.-%, berechnet als elementare Einzelsubstanzen, und eine Körperdichte von mindestens 4,55 g/cm$^3$ hat.

2. Sinterkörper aus Zirconium, **dadurch gekennzeichnet, daß** er einen Zirconiumgehalt von mindestens 98 Gew.-%, einen Gehalt an metallischen Fremdstoffen außer Zirconium und Silicium von höchstens 0,44 Gew.-%, berechnet als elementare Einzelsubstanzen, und eine Körperdichte von mindestens 4,55 g/cm$^3$ und eine mittlere Korngröße von höchstens 5μm hat.

3. Verfahren zur Herstellung eines Sinterkörpers aus Zirconium, **dadurch gekennzeichnet, daß** es folgende Schritte aufweist: Formen eines kristallinen Zirconiumpulvers mit einem Si/Zr-Atomverhältnis von 0,95 - 1,1, einem Zirconiumgehalt von mindestens 80 Gew.-%, einem Gehalt an metallischen Fremdstoffen außer Zirconium und Silicium von höchstens 0,44 Gew.-%, berechnet für die elementaren Einzelsubstanzen, gefolgt von einem Sintern in einem Temperaturbereich von 1600 bis 1700°C für mindestens 30 Minuten.

4. Verfahren zur Herstellung eines Sinterkörpers aus Zirconium, **dadurch gekennzeichnet, daß** es folgende Schritte aufweist: Formen eines kristallinen Zirconiumpulvers mit einem Si/Zr-Atomverhältnis von 0,95 - 1,1, einem Zirconiumgehalt von mindestens 80 Gew.-%, einem Gehalt an metallischen Fremdstoffen außer Zirconium und Silicium von höchstens 0,44 Gew.-%, berechnet für die elementaren Einzelsubstanzen, und einer mittleren Teilchengröße von höchstens 2,0 μm, gefolgt von einem Sintern in einem Temperaturbereich von 1600 bis 1700°C für mindestens 30 Minuten.

5. Verfahren nach Anspruch 3 oder Anspruch 4, **dadurch gekennzeichnet, daß** das Sintern für höchstens 10 Stunden ausgeführt wird.

6. Verfahren nach einem der Ansprüche 3, 4 oder 5 **dadurch gekennzeichnet, daß** das Sintern als Sintern mit Heißpressen oder mit heiß- oder kaltisostatischem Pressen ausgeführt wird.

**Revendications**

1. Corps fritté de zircon, caractérisé par le fait qu'il présente une teneur en zircon d'au moins 98% en poids, une teneur en impuretés métalliques autres que le zirconium et le silicium d'au plus 0,44% en poids, calculée en tant que substances simples élémentaires, et une masse volumique apparente d'au moins 4,55 g/cm$^3$.

2. Corps fritté de zircon, caractérisé par le fait qu'il présente une teneur en zircon d'au moins 98% en poids, une teneur en impuretés métalliques autres que le zirconium et le silicium d'au plus 0,44% en poids, calculée en tant que substances simples élémentaires, et une masse volumique apparente d'au moins 4,55 g/cm$^3$ et une dimension moyenne de grain d'au plus 5 μm.

3. Procédé de fabrication d'un corps fritté de zircon, caractérisé par le fait qu'il comprend le moulage d'une poudre cristalline de zircon ayant un rapport atomique Si/Zr de 0,95 à 1,1, une teneur en zircon d'au moins 80% en poids, une teneur en impuretés métalliques autres que le zirconium et le silicium d'au plus 0,44% en poids, calculée en tant que substances simples élémentaires, suivi par un frittage à l'intérieur d'une plage de températures allant de 1 600 à 1 700°C, pendant au moins 30 minutes.

4. Procédé de fabrication d'un corps fritté de zircon, caractérisé par le fait qu'il comprend le moulage d'une poudre cristalline de zircon ayant un rapport atomique Si/Zr de 0,95 à 1,1, une teneur en zircon d'au moins 80% en poids, une teneur en impuretés métalliques autres que le zirconium et le silicium d'au plus 0,44% en poids, calculée en tant que substances simples élémentaires, et une dimension moyenne de particule d'au plus 2,0 μm, suivi par un frittage à l'intérieur d'une plage de températures de 1 600 à 1 700°C, pendant au moins 30 minutes.

5. Procédé selon la revendication 3 ou la revendication 4, caractérisé par le fait que le frittage est conduit pendant au plus 10 heures.

6. Procédé selon l'une des revendications 3, 4 et 5, caractérisé par le fait que le frittage est conduit par compression à chaud ou frittage par compression isostatique à chaud ou à froid.